# EUROPEAN PATENT SPECIFICATION

(11) **EP 3 910 749 B1**
(45) Date of publication and mention of the grant of the patent: **02.12.2026**
(21) Application number: 20216988.4
(22) Date of filing: 23.12.2020
(51) Int. Cl.: H02J 7/44, H02J 7/50

(54) **BATTERY MODULE, CHARGING CONTROL METHOD, ELECTRONIC DEVICE, AND STORAGE MEDIUM**
BATTERIEMODUL, LADESTEUERUNGSVERFAHREN, ELEKTRONISCHE VORRICHTUNG UND SPEICHERMEDIUM
MODULE DE BATTERIE, PROCÉDÉ DE COMMANDE DE RECHARGE, DISPOSITIF ÉLECTRONIQUE ET SUPPORT DE STOCKAGE

(30) Priority: 14.05.2020 CN 202010408781
(43) Date of publication of application: 17.11.2021
(73) Proprietor: Beijing Xiaomi Mobile Software Co., Ltd., Beijing 100085 (CN)
(72) Inventor: TSENG, Yaoyi, Beijing, Beijing 100085 (CN); CHEN, Renjie, Beijing, Beijing 100085 (CN)
(74) Representative: dompatent

(56) References cited:
- EP-A1- 3 373 406
- EP-A1- 3 503 282
- JP-A- 2008 278 635
- KR-B1- 101 845 793
- US-A1- 2016 099 588

## Description

### FIELD

The present invention relates to the field of charging technologies, and more particularly, to a battery module, a charging control method, an electronic device, and a storage medium.

### BACKGROUND

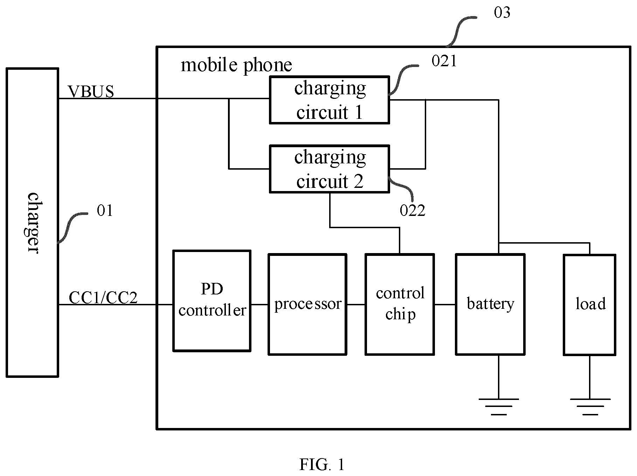

Electronic devices in the related prior art adopt the following charging architecture. As illustrated in FIG. 1, the architecture usually includes a charger 01 and a mobile phone 03. The mobile phone 03 includes a charging conversion device (such as a charging circuit 021 and a charging circuit 022) and a battery module system. In order to prevent the charging current from exceeding a maximum current of the charging cable, in the related art, an output voltage of the charger 01 is generally increased, and a voltage conversion is performed through the charging circuit 021 and the charging circuit 022. Normally, the output voltage of the charging circuit 021 and the charging circuit 022 is half of the output voltage of the charger 01, that is, the battery module is charged with a high voltage and a low current. However, in the above-mentioned charging architecture, the charging conversion device may generate heat loss during a voltage conversion process, which heats up a temperature of the mobile phone, reduces charging efficiency, prolongs charging time, and affects charging experience of users.

US2016099588A1 discloses a charging electronic device including a communication module configured to receive one or more types of power; a power control module configured to charge or discharge a battery module with selected power among the one or more types of power; and a control module configured to change a charging condition or discharging condition of the power control module to correspond to the selected power among the one or more types of power to charge or discharge the battery module.

### SUMMARY

The present invention provides a battery module, a charging control method, an electronic device, and a storage medium to solve deficiencies in the related art.

According to the present invention, a battery module according to the features of independent claim 1 is provided.

According to the present invention, a charging control method for a battery module according to the features of independent claim 5 is provided.

According to the present invention, an electronic device according to independent claim 11 is provided.

According the present invention, a readable storage medium having an executable computer program stored according to independent claim 12 thereon is provided.

Further embodiments of the present invention are defined by the dependent claims.

The technical solution according to embodiments of the present invention includes the following beneficial effects.

It may be seen from the above embodiments that the controller according to the present invention may determine whether the battery module is to be charged. In response to that the battery module is to be charged, the series-parallel conversion circuit is controlled to convert the connection mode of cells in the plurality of cells, such that the plurality of cells form the charging architecture state with the charging current greater than the preset current value. The charging architecture state includes at least one of: at least two cells coupled in series, at least two cells coupled in parallel, a combination of first cells coupled in series and second cells coupled in parallel, and a single cell. In this manner, according to the present invention, the charging architecture state of the plurality of cells is adjusted, such that the charging current is greater than the preset current value and less than the maximum current of the charging cable. That is, the battery module may be charged with a high voltage and a large current without a voltage conversion device, helping to increase charging efficiency of the battery module. In addition, the series-parallel conversion circuit according to embodiments of the present invention does not participate in voltage conversion and does not cause heat loss, which is beneficial to improving the charging efficiency of the battery module.

It should be understood that the above general description and the following detailed description are only exemplary and explanatory, and cannot limit the present invention. The present invention is solely defined by the appended claims.

### BRIEF DESCRIPTION OF THE DRAWINGS

The accompanying drawings, which are incorporated in and constitute a part of this specification, illustrate embodiments consistent with the present invention and, together with the description, serve to explain the principles of the present invention.
FIG. 1 is a block diagram of an electronic device in related art.
FIG. 2 is a block diagram of a battery module according to an exemplary embodiment.
FIG. 3 is a circuit diagram of a series-parallel conversion circuit according to an exemplary embodiment.
FIGS. 4-6 are circuit diagrams of a charging architecture of a series-parallel conversion circuit according to an exemplary embodiment.
FIGS. 7-9 are flowcharts of a charging control method according to an exemplary embodiment.
FIG. 10 is a schematic diagram of a charging curve according to an exemplary embodiment.
FIGS. 11-14 are block diagrams of a charging control apparatus according to an exemplary embodiment.
FIG. 15 is a block diagram of an electronic device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present invention. Instead, they are merely examples of apparatuses and methods consistent with aspects related to the present invention as recited in the appended claims.

Electronic devices in related art adopt the following charging architecture. As illustrated in FIG. 1, the architecture usually includes a charger 01 and a mobile phone 03. The mobile phone 03 includes a charging conversion device (FIG. 1 includes a charging circuit 021 and a charging circuit 022) and a battery module system. In order to prevent the charging current from exceeding a maximum current of a charging cable, in the related art, an output voltage of the charger 01 is generally increased, and a voltage conversion is performed through the charging circuit 021 and the charging circuit 022. Normally, the output voltage of the charging circuit 021 and the charging circuit 022 is half of the output voltage of the charger 01, that is, the battery module is charged with a high voltage and a low current. However, in the above-mentioned charging architecture, the charging conversion device generates heat loss during the voltage conversion process, which heats up a temperature of the mobile phone, reduces charging efficiency, prolongs charging time, and affects charging experience of users.

To solve the above technical problems, embodiments of the present invention provide a battery module. A series-parallel conversion circuit is arranged in the battery module, and the series-parallel conversion circuit is configured to adjust a charging architecture state of a plurality of cells in the battery module, such that a charging current is adjusted to be greater than a preset current value and less than a maximum current of a charging cable. Consequently, an effect of using a high voltage and large current to charge the battery module is achieved, which is beneficial to improving the charging efficiency of the battery module. In addition, the series-parallel conversion circuit according to the present invention neither participates in voltage conversion nor causes heat loss, which is also helpful for improving the charging efficiency of the battery module.

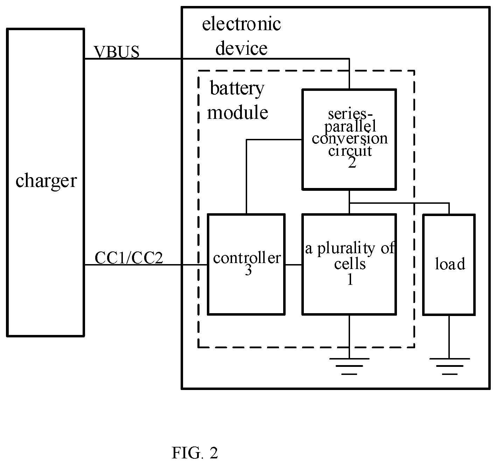

FIG. 2 is a block diagram of a battery module according to an exemplary embodiment. Referring to FIG. 2, the battery module includes: a plurality of cells 1, a series-parallel conversion circuit 2 and a controller 3. The series-parallel conversion circuit 2 is respectively coupled to the controller 3 and the plurality of cells 1. The controller 3 is configured to control the series-parallel conversion circuit 2 to convert a connection mode of cells in the plurality of cells 1 when the battery module is to be charged, such that the plurality of cells 1 form a charging architecture state with a charging current greater than a preset current value, the charging architecture state including at least one of: at least two cells coupled in series, at least two cells coupled in parallel, a combination of first cells coupled in series and second cells coupled in parallel, and a single cell.

It should be noted that the controller 3 according to the embodiment may be arranged inside the battery module, that is, the battery module may be produced as an independent product. In an embodiment, the controller 3 may be implemented by a processor or a power management chip of an electronic device where the battery module is in, which is not limited here. The following embodiments of the present invention are described by taking an example of arranging the controller 3 inside the battery module. In this case, the battery module may directly communicate with an external charger that charges the battery module and determine whether to charge the battery module, thereby improving the charging efficiency. In addition, dependence of the battery module on the processor or the power management chip of the electronic device may be reduced, and working efficiency of the processor or the power management chip may be improved.

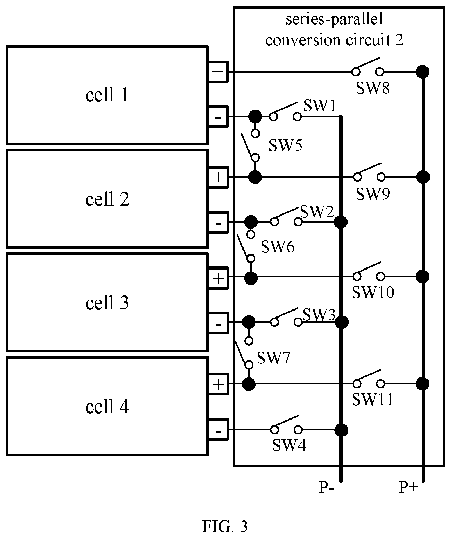

FIG. 3 is a circuit diagram of the series-parallel conversion circuit 2 (FIG. 2) according to an exemplary embodiment. In the embodiment, the series-parallel conversion circuit 2 includes a plurality of switching devices (e.g., SW1 to SW11). Each of the plurality of switching devices is coupled to a positive electrode (indicated by "+") or a negative electrode (indicated by "-") of one cell. As illustrated in FIG. 3, a switching device SW8 is coupled to a positive electrode of a cell 1, switching devices SW5 and SW9 are coupled to a positive electrode of a cell 2, switching devices SW6 and SW10 are coupled to a positive electrode of a cell 3, switching devices SW7 and SW11 are coupled to a positive electrode of a cell 4, and switching devices SW8, SW9, SW10 and SW11 are coupled to a power input end P+. The switching device SW5 is also coupled to a negative electrode of the cell 1, the switching device SW6 is also coupled to a negative electrode of the cell 2, and SW7 is also coupled to a negative electrode of the cell 3. In this manner, when a switching device is coupled to a positive electrode of a cell, the positive electrode is coupled to a power input end of the battery module or a negative electrode of an upper-level cell based on a control signal of the controller. For example, the switching device SW5 may couple the positive electrode of the cell 2 to the negative electrode of the cell 1, and the cell SW9 may couple the positive electrode of the cell 2 to the power input end P+.

When the switching device is coupled to the negative electrode of the cell, the negative electrode is coupled to the power output end of the battery module based on the control signal of the controller. For example, the switching device SW1 may couple the negative electrode of the cell 1 to a power output end P-.

The upper-level cell may be a cell that is located between a current-level cell and the power input end P+ and is closest to the current-level cell in a series charging architecture state of the plurality of cells. Referring to FIG. 3, when the cells 1 to 4 are charged in the series charging architecture state, the cell 1 is an upper-level cell of the cell 2, the cell 2 is an upper-level cell of the cell 3, and the cell 3 is an upper-level cell of the cell 4. It should be noted that since the cell 1 is directly coupled to the power input end P+, the cell 1 does not have an upper-level cell.

In an embodiment, a number of the plurality of cells is four. With continued reference to FIG. 3, the series-parallel conversion circuit 2 may include: the switching device SW1, the switching device SW2, the switching device SW3, the switching device SW4, the switching device SW5, the switching device SW6, the switching device SW7, the switching device SW8, and the switching device SW9, the switching device SW10 and the switching device SW11. The switching device SW1 is arranged between the negative electrode of the cell 1 and the power output end P-, the switching device SW2 is arranged between the negative electrode of the cell 2 and the power output end P-, the switching device SW3 is arranged between the negative electrode of the cell 3 and the power output end P-, and the switching device SW4 is arranged between the negative electrode of the cell 4 and the power output end P-. The switching device SW8 is arranged between the positive electrode of the cell 1 and the power input end P+. The switching device SW5 is arranged between the positive electrode of the cell 2 and the negative electrode of the cell 1, the switching device SW6 is arranged between the positive electrode of the cell 3 and the negative electrode of the cell 2, and the switching device SW7 is arranged between the positive electrode of the cell 4 and the negative electrode of the cell 3. The switching device SW9 is arranged between the positive electrode of the cell 2 and the power input end P+, the switching device SW10 is arranged between the positive electrode of the cell 3 and the power input end P+, and the switching device SW11 is coupled in series between the positive electrode of the cell 2 and the power input end P+.

It should be noted that control ends of the above-mentioned switching devices SW1 to SW11 are all coupled to the controller 3, so that the control signal sent by the controller 3 may be received, and an ON state or an OFF state may be realized based on the control signal.

In an embodiment, the switching devices SW1 to SW11 may be implemented by field effect transistors. The switching devices SW1 to SW11 may also be implemented by a single-pole double-throw switch. In an embodiment, the switching devices SW5 and SW9 may be implemented by one single-pole double-throw switch. Similarly, SW6 and SW10 as well as SW7 and SW11 may be implemented by one single-pole double-throw switch, respectively.

In an embodiment, the series-parallel conversion circuit 2 is configured to adjust the cells 1 to 4 to one of the following charging architecture states: at least two cells coupled in series, at least two cells coupled in parallel, a combination of first cells coupled in series and second cells coupled in parallel, and a single cell, states of the switching devices SW5, SW6 and SW7 are different from states of other switching devices. For example, when the switching devices SW5, SW6 and SW7 are in the ON state, positive electrodes of current-level cells will be coupled to negative electrodes of upper-level cells, and when the switching devices SW5, SW6 and SW7 are in the OFF state, the connection between the positive electrodes of the current-level cells and the negative electrodes of the upper-level cells will be disconnected. Referring to FIG. 3, taking the switching device SW5 as an example, an ON state of SW5 refers to a connection to the left end of the switching device SW1. In this manner, the positive electrode of the cell 2 is coupled to the negative electrode of the cell 1. The OFF state of the switching device SW5 refers to disconnecting a connection between the positive electrode of the cell 2 and the negative electrode of the cell 1.

The controller 3 may directly communicate with the charger. In an embodiment, the charger has different protocol types, and the battery module further includes a protocol conversion chip. The protocol conversion chip is arranged between the controller 3 and the charger and is configured for a charging protocol conversion between the controller and the charger.

In an embodiment, the controller 3 may communicate with the external charger to determine a charging parameter that the charger may provide. In an embodiment, the controller 3 may not require the charger to determine the charging parameter that it may provide, that is, the controller determines that the charger may provide any charging parameter required by the battery module by default.

In the following, the working process of the battery modules in different charging architecture states is described by taking the controller 3 communicating with the charger to determine the charging parameter and with reference to the battery module illustrated in FIGS. 2 to 6.

### Charging architecture state 1

In the charging architecture state 1, the charging voltage is four times of the cell voltage. And the four cells are charged in series.

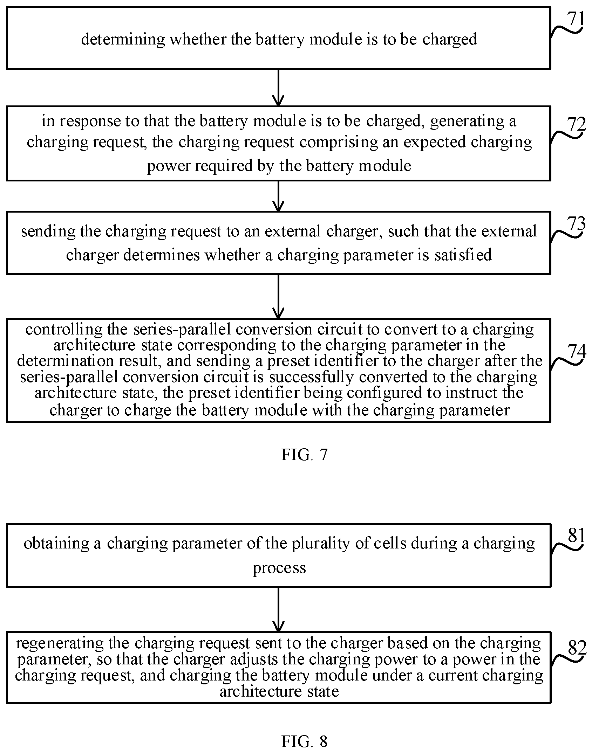

Referring to FIGS. 2 and 7, at block 71, the controller 3 obtains current charging parameters of the battery module, such as electric quantity, a relative voltage or an absolute voltage, and preset parameter thresholds of the charging parameters. Taking the charging parameter as the electric quantity as an example, the controller 3 may determine whether the battery module is to be charged based on a current electric quantity and an electric quantity threshold. For example, the electric quantity threshold may be set to several groups, such as 80%, 60%, 45%, and 30% and below. When the current electric quantity of the battery module is less than or equal to the above-mentioned electric quantity thresholds, the battery module is to be charged. When the current electric quantity of the battery module is greater than 80%, the battery module may not to be charged. In some embodiments, as long as the current electric quantity of the battery module is less than 100%, the battery module may be charged. The battery module may not to be charged when the electric quantity is equal to 100%. A person skilled in the art may make settings according to specific scenes.

In an example, the charging parameter may also be a charging level. The controller determines the charging level based on the electric quantity of the battery and the voltage, as illustrated in Table 1.

**Table 1**

| Charging level | | | | |
|---|---|---|---|---|
| | 1 | 2 | 3 | 4 |
| Output voltage | 0.5-5 | 5-10 | 10-15 | 15-20 |
| Output current | 0.1-3 | 1.5-3 | 1.5-3 | 3-6 |

At block 72, the controller 3 generates a charging request when determining that the battery module is to be charged. The charging request includes charging parameters required by the battery module. The charging voltage in the charging parameters is illustrated as an example. If a voltage of the cell 1 is 4.25V, the charging voltage may be greater than 4.25. For example, if the maximum current of the charging cable is 5A and the maximum voltage of the battery is 5V, the maximum charging power allowed by the battery module may be (4.25V*5A*4)=85W. The method to calculate the charging power may be referred to related technologies, and is not limited here.

At block 73, the controller 3 may send the charging request to the charger. The charger obtains the charging parameter in the charging request, and determines whether the charging parameter may be provided to obtain a determination result that the charging parameter may be or may not be provided. The charger feeds back the determination result to the controller 3. When the determination result indicates that the charging parameter may not be provided, the charger may also feeds back a charging parameter that may be provided. For example, the charger may not provide a charging power of 85W, but may provide a charging power of 50W.

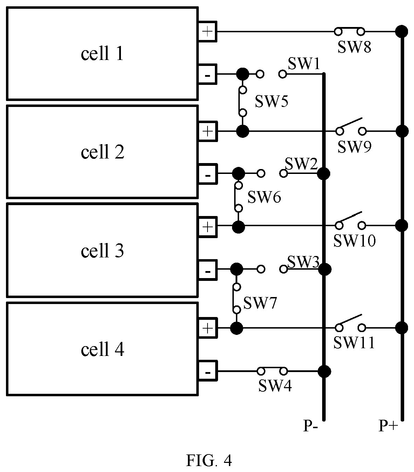

At block 74, the controller 3 may control the series-parallel conversion circuit 2 to convert to a charging architecture state corresponding to the charging parameter, and send a preset identifier to the charger after the series-parallel conversion circuit 2 is successfully converted to the charging architecture state. The preset identifier is configured to instruct the charger to charge the battery module with the charging parameter. Take the above charging power being provided by the charger as an example. The controller 3 sends a control signal to the series-parallel conversion circuit 2 after receiving the determination result, and each switching device in the series-parallel conversion circuit 2 switches to the ON state or OFF state based on the control signal, so that the cells 1 to 4 are charged in series, and the circuit as illustrated in FIG. 4 is obtained. Assuming that the charging voltage of each cell is 4.5V, the output voltage of the charger is 4*4.5V=18V, and the charging power is 85W.

And then, the charger charges the battery module based on the charging power of 85W.

### Charging architecture state 2

**In** the charging architecture state 2, the charging voltage is twice the cell voltage. **In** this case, every two cells in the four cells are coupled in series and then charged in parallel. **In** other words, the charger may only provide a charging voltage that is twice the cell voltage.

The controller 3 obtains the current charging parameter of the battery module and determines whether the battery module is to be charged. The controller 3 generates the charging request when determining that the battery module is to be charged. The charging request includes the charging parameter required by the battery module.

The controller 3 may send the charging request to the charger. The charger obtains the charging parameter in the charging request, and determines whether the above charging parameter may be satisfied to obtain a determination result that the above charging parameter may be or may not be satisfied. The charger feeds back the determination result to the controller 3.

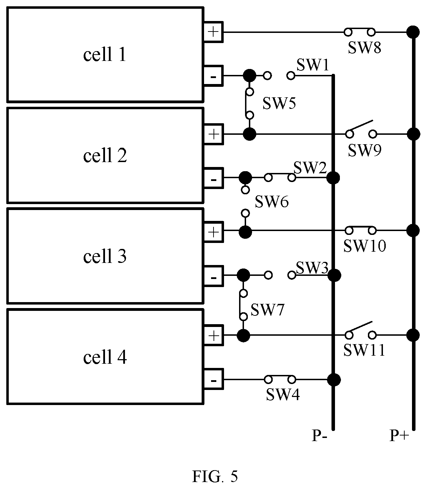

When the charger determines that the charging parameter may not be satisfied, a charging parameter that the charger may satisfy may be fed back to the controller 3. The controller 3 may send the control signal to the series-parallel conversion circuit 2 based on the charging parameter that may be satisfied. Each switching device in the series-parallel conversion circuit 2 is switched to the ON state or OFF state based on the control signal, so that the cells 1 to 4 are coupled in series two by two and then charged in parallel to obtain the circuit as illustrated in FIG. 5. Assuming that the charging voltage of each cell is 4.5V, the output voltage of the charger is 2*4.5V=9V, and the charging power is 5*9=45W.

Finally, the charger charges the battery module based on the charging power of 45W.

### Charging architecture state 3

In the charging architecture state 3, the charging voltage is equal to the cell voltage, and the four cells are charged in parallel. In other words, the charger may only provide a charging voltage that is the same as the cell voltage.

The controller 3 obtains the current charging parameter of the battery module and determines whether the battery module is to be charged. The controller 3 generates the charging request when determining that the battery module is to be charged. The charging request includes the charging parameter required by the battery module.

The controller 3 may send the charging request to the charger. The charger obtains the charging parameter in the charging request, and determines whether the charging parameter may be satisfied to obtain a determination result that the above charging parameter may be or may not be satisfied. The charger feeds back the determination result to the controller 3.

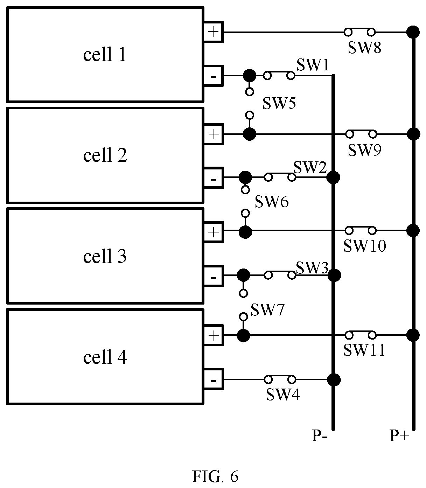

When the charger determines that the charging parameter may not be satisfied, a charging parameter that the charger may satisfy may be fed back to the controller 3. The controller 3 sends the control signal to the series-parallel conversion circuit 2, based on the charging parameter that may be satisfied. Each switching device in the series-parallel conversion circuit 2 is switched to the ON state or OFF state based on the control signal, so that the cells 1 to 4 are charged in parallel to obtain the circuit as illustrated in FIG. 6. Assuming that the charging voltage of each cell is 4.5V, the output voltage of the charger is 4.5V, and the charging power is 22.5W.

Finally, the charger charges the battery module based on the charging power of 22.5W.

The above embodiments provide three typical charging architecture states. In some embodiments, the controller 3 may also control any set of the cells 1 and 2, the cells 2 and 3, the cells 3 and 4, and any one of cells 1 to 4 for charging. The charging voltage is no longer limited to four times, two times and one times of the cell voltage. The combinations also falls into the scope of the present invention.

In an embodiment, in each of the above charging architecture states, after the communication between the controller 3 and the charger is completed, the charger charges the battery module. Referring to FIG. 8, at block 81, during the charging process, the controller 3 may detect the charging parameter of the battery module in real time. At block 82, the controller 3 regenerates the charging request sent to the charger based on the charging parameter, so that the charger adjusts the charging power in the current charging architecture state. For example, when the voltage of each cell in the battery module reaches 4.6V, constant voltage (CV) charging may be adopted. In this manner, the charging current is adjusted to reduce the charging power until the charging is completed.

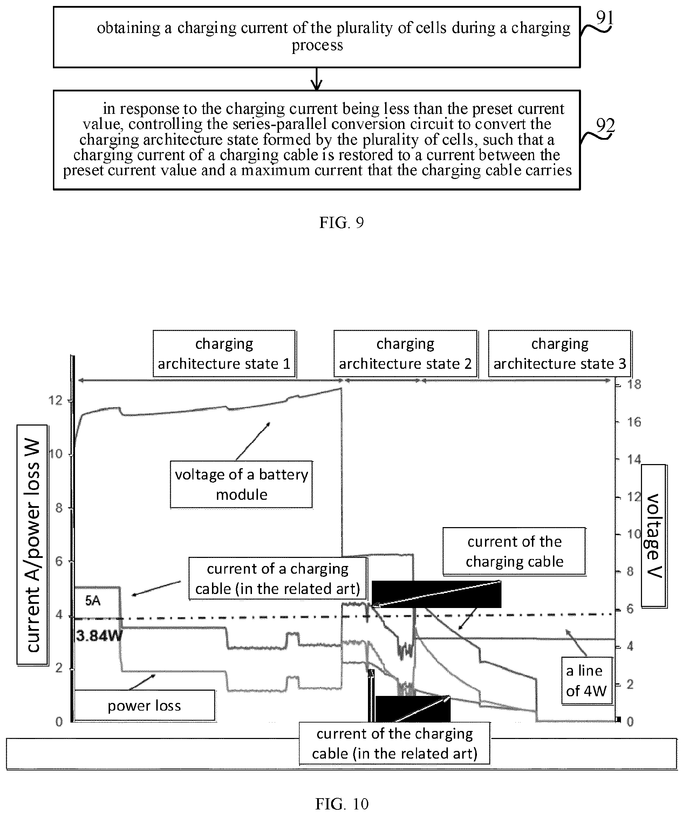

In some embodiments, when a manner of performing charging with the plurality of cells coupled in series is used all the time, one cell may be damaged, resulting in high voltage but not charged, that is, some cells are over-voltage and other cells are under-voltage. In this case, it takes a long time to charge the battery module, which reduces the charging efficiency of the battery module. In order to ensure the charging efficiency, in an embodiment, the controller 3 may also adjust the charging architecture state of the plurality of cells. Referring to FIG. 9, at block 91, the controller 3 may obtain a charging current of the plurality of cells. For example, the controller 3 may communicate with a voltammeter in the battery module to obtain the charging current. At block 92, the controller 3 compares the charging current with a preset current value (for example, 2.5A). When the charging current is less than the preset current value, the controller 3 may couple two (or more) cells in series, and then a plurality of series branches are coupled in parallel, thereby obtaining a series-parallel charging architecture. In this manner, when the charging current does not exceed the maximum current of the charging cable, the voltage of the cells is balanced by parallel charging, so that the plurality of cells may be in the same state of use, trying to achieve an effect of synchronous charging, and improving the charging efficiency.

With continued reference to FIG. 3, when the cells are charged in the charging architecture state 1, if the charging current drops to 2.5A (or below), the current of the charging cable is also 2.5A. In order to ensure that the charging current of the battery module is restored to a value between 2.5A and 5A, even if the current of the charging cable is as close as possible to 5A, the controller 3 may couple two cells in series to form one series branch, so that two series branches may be coupled in parallel to realize a current of 5A of the charging cable. The controller 3 may switch the charging architecture state 1 to the charging architecture state 2. In the charging architecture state 2, as the cell voltage increases, the charging current will continue to decrease. When the current of the charging cable drops to 2.5A (or below) again, the controller 3 may change the charging architecture state 2 to the charging architecture state 3. Based on the above charging process, the charging curve illustrated in FIG. 10 may be obtained. Compare the current of the charging cable in the related art with the current of the charging cable according to the embodiment, for the charging architecture state 2 and charging architecture state 3, the current of the charging cable according to the embodiment is between 2.5A and 5A, while the current of the charging cable in the related art continues to decrease. In this manner, the charging voltage of each cell is balanced while the balance of the charging power of each cell is maintained, so that the charging efficiency is increased.

According to the present invention, the charging architecture state of the plurality of cells is adjusted, such that the charging current is greater than the preset current value and less than the maximum current of the charging cable. That is, the battery module may be charged with a high voltage and a large current without a voltage conversion device, helping to increase the charging efficiency of the battery module. In addition, the series-parallel conversion circuit according to embodiments of the present invention does not participate in voltage conversion and does not cause heat loss, which is beneficial to improving the charging efficiency of the battery module.

The present invention provides a charging control method, which is applicable to a battery module including a plurality of cells. The method includes: determining whether the battery module is to be charged; and in response to that the battery module is to be charged, converting a connection mode of cells in the plurality of cells, such that the plurality of cells form a charging architecture state with a charging current greater than a preset current value. The charging architecture state includes at least one of: at least two cells coupled in series, at least two cells coupled in parallel, a combination of first cells coupled in series and second cells coupled in parallel, and a single cell.

In an embodiment, before converting the connection mode of the cells in the plurality of cells, the method includes: determining a charging parameter provided by an external charger; and converting the connection mode of the cells in the plurality of cells, such that the plurality of cells form a charging architecture state matching the charging parameter provided by the external charger.

In an embodiment, before controlling the series-parallel conversion circuit to convert the connection mode of the cells in the plurality of cells, the method includes: in response to that the battery module is to be charged, generating a charging request, wherein the charging request includes an charging power required by the battery module; sending the charging request to an external charger, such that the external charger determines whether the external charger can satisfy the required charging power and returns a determination result, wherein the determination result includes a target charging power that the external charger may provide, and the target charging power is less than or equal to the required charging power; and after the determination result is received, converting the connection mode of cells in the plurality of cells, such that the plurality of cells form a charging architecture state matching the target charging power, and an initial charging current in the charging architecture state being a maximum current that a charging cable may carry.

In an embodiment, generating the charging request includes: obtaining a current voltage of the plurality of cells and the maximum current that the charging cable may carry; obtaining the charging power required by the battery module based on the current voltage and the maximum current; and generating the charging request based on the obtained charging power.

In an embodiment, the method includes sending a preset identifier to an external charger after the plurality of cells are converted into the charging architecture state. The preset identifier is configured to instruct the external charger to charge the battery module at a target charging power.

In an embodiment, the method includes: obtaining a charging current of the plurality of cells during a charging process; and in response to the charging current being less than the preset current value, converting the charging architecture state formed by the plurality of cells, such that a charging current of a charging cable is restored to a current between the preset current value and a maximum current that the charging cable may carry.

In an embodiment, determining whether the battery module is to be charged includes: obtaining at least one current charging parameter of the battery module and at least one preset parameter threshold of the at least one current charging parameter; and determining whether the battery module is to be charged, based on the at least one preset parameter threshold and the at least one current charging parameter.

It may be understood that the method according to embodiments of the present invention corresponds to embodiments of the charging device. The specific content of the method may be referred to the content of embodiments of the charging device, and thus will not be repeated here.

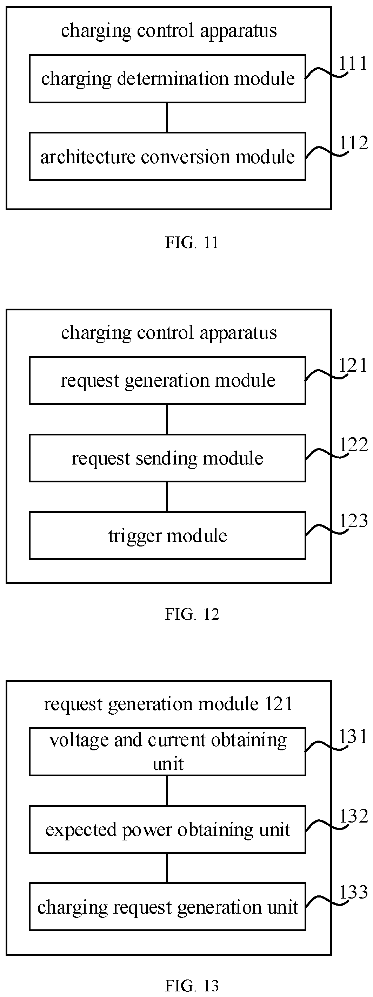

FIG. 11 is a block diagram of a charging control apparatus according to an exemplary embodiment. FIG. 11 illustrates a charging control apparatus, which is applicable to a battery module including a plurality of cells, a series-parallel conversion circuit, and a controller. The apparatus includes a charging determination module 111 and an architecture conversion module 112.

The charging determination module 111 is configured to determine whether the battery module is to be charged.

The architecture conversion module 112 is configured to, in response to that the battery module is to be charged, control the series-parallel conversion circuit to convert a connection mode of cells in the plurality of cells, such that the plurality of cells form a charging architecture state with a charging current greater than a preset current value. The charging architecture state includes at least one of: at least two cells coupled in series, at least two cells coupled in parallel, a combination of first cells coupled in series and second cells coupled in parallel, and a single cell.

In an embodiment, as illustrated in FIG. 12, the apparatus includes a request generation module 121, a request sending module 122, and a trigger module 123.

The request generation module 121 is configured to, in response to that the battery module is to be charged, generate a charging request. The charging request includes an expected charging power required by the battery module.

The request sending module 122 is configured to send the charging request to an external charger, such that the external charger determines whether the external charger can satisfy the required charging power and returns a determination result. The determination result includes a target charging power that the external charger may provide, and the target charging power is less than or equal to the required charging power.

The trigger module 123 is configured to, after the determination result is received, trigger the architecture conversion module to convert a charging architecture, such that the plurality of cells form a charging architecture state matching the target charging power. An initial charging current in the charging architecture state is a maximum current that a charging cable may carry.

In an embodiment, as illustrated in FIG. 13, the request generation module 121 (FIG. 12) includes a voltage and current obtaining unit 131, an expected power obtaining unit 132, and a charging request generation unit 133.

The voltage and current obtaining unit 131 is configured to obtain a current voltage of the plurality of cells and the maximum current that the charging cable may carry.

The expected power obtaining unit 132 is configured to obtain the charging power required by the battery module based on the current voltage and the maximum current.

The charging request generation unit 133 is configured to generate the charging request based on the obtained charging power.

In an embodiment, the apparatus includes a preset identifier sending module. The preset identifier sending module is configured to send a preset identifier to an external charger after the plurality of cells are converted into the charging architecture state. The preset identifier is configured to instruct the external charger to charge the battery module at a target charging power.

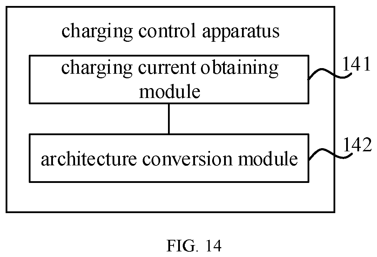

In an embodiment, as illustrated in FIG. 14, the apparatus includes a charging current obtaining module 141 and an architecture conversion module 142.

The charging current obtaining module 141 is configured to obtain a charging current of the plurality of cells during a charging process.

The architecture conversion module 142 is configured to, in response to the charging current being less than the preset current value, control the series-parallel conversion circuit to convert the charging architecture state formed by the plurality of cells, such that a charging current of a charging cable is restored to a current between the preset current value and a maximum current that the charging cable may carry.

It may be understood that the apparatus according to the present invention corresponds to the method embodiments as described above. The specific content of the apparatus may be referred to the content of the method embodiments, and thus will not be repeated here.

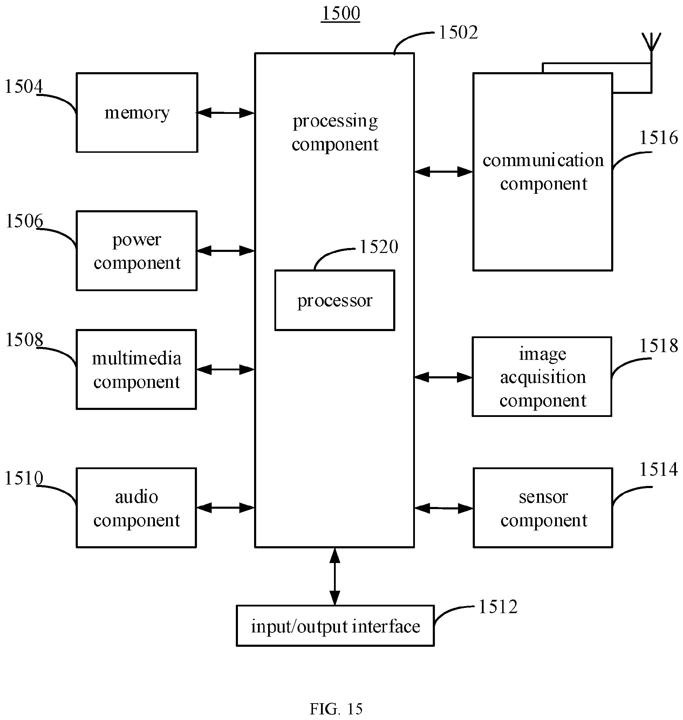

FIG. 15 is a block diagram of an electronic device 1500 according to an exemplary embodiment. For example, the electronic device 1500 may be a smartphone, a computer, a digital broadcast terminal, a tablet device, a medical device, an exercise device, a personal digital assistant, and so on.

Referring to FIG. 15, the electronic device 1500 may include one or more of the following components: a processing component 1502, a memory 1504, a power component 1506, a multimedia component 1508, an audio component 1510, an input/output (I/O) interface 1512, a sensor component 1514, a communication component 1516, and an image acquisition component 1518.

The processing component 1502 normally controls the overall operation (such as operations associated with displaying, telephone calls, data communications, camera operations and recording operations) of the electronic device 1500. The processing component 1502 may include one or a plurality of processors 1520 to execute instructions so as to perform all or part of the steps of the above described method. In addition, the processing component 1502 may include one or a plurality of units to facilitate interactions between the processing component 1502 and other components. For example, the processing component 1502 may include a multimedia unit to facilitate interactions between the multimedia component 1508 and the processing component 1502.

The memory 1504 is configured to store various types of data to support operations at the electronic device 1500. Examples of such data include computer programs for any application or method operated on the electronic device 1500, contact data, phone book data, messages, images, videos and the like. The memory 1504 may be realized by any type of volatile or non-volatile storage devices, or a combination thereof, such as a static random access memory (SRAM), an electrically erasable programmable read only memory (EEPROM), an erasable programmable read only memory (EPROM), a programmable read only memory (PROM), a read only memory (ROM), a magnetic memory, a flash memory, a disk or an optical disk.

The power component 1506 provides power to various components of the electronic device 1500. The power component 1506 may include a power management system, one or a plurality of power sources and other components associated with power generation, management, and distribution of the electronic device 1500. The power component 1506 may include a power chip. The controller may communicate with the power chip to control the power chip to turn on or off the switching device, so that the battery supplies power or does not supply power to a main board circuit. In an example, the power component 1506 includes the battery module illustrated in FIGS. 2-6.

The multimedia component 1508 includes a screen that provides an output interface between the electronic device 1500 and a target object. In some embodiments, the screen may include a liquid crystal display (LCD) and a touch panel (TP). If the screen includes a touch panel, the screen may be implemented as a touch screen to receive input signals from the user. The touch panel includes one or a plurality of touch sensors to sense touches, slides, and gestures on the touch panel. The touch sensor may sense not only the boundary of the touches or sliding actions, but also the duration and pressure related to the touches or sliding operations.

The audio component 1510 is configured to output and/or input an audio signal. For example, the audio component 1510 includes a microphone (MIC) that is configured to receive an external audio signal when the electronic device 1500 is in an operation mode such as a call mode, a recording mode, and a voice recognition mode. The received audio signal may be further stored in the memory 1504 or transmitted via the communication component 1516. In some embodiments, the audio component 1510 further includes a speaker for outputting audio signals.

The I/O interface 1512 provides an interface between the processing component 1502 and a peripheral interface unit. The peripheral interface unit may be a keyboard, a click wheel, a button and so on.

The sensor assembly 1514 includes one or more sensors for providing the electronic device 1500 with various aspects of status assessments. For example, the sensor component 1514 may detect an ON/OFF state of the electronic device 1500 and a relative positioning of the components. For example, the components may be a display and a keypad of the electronic device 1500. The sensor component 1514 may also detect a change in position of the electronic device 1500 or a component of the electronic device 1500, the presence or absence of contact of the target object with the electronic device 1500, the orientation or acceleration/deceleration of the electronic device 1500 and a temperature change of the electronic device 1500.

The communication component 1516 is configured to facilitate wired or wireless communication between the electronic device 1500 and other devices. The electronic device 1500 may access a wireless network based on a communication standard such as Wi-Fi, 2G, 3G, 4G/LTE or 5G or a combination thereof. In an exemplary embodiment, the communication component 1516 receives broadcast signals or broadcast-associated information from an external broadcast management system via a broadcast channel. In an exemplary embodiment, the communication component 1516 further includes a near field communication (NFC) module to facilitate short range communication. For example, the NFC module can be implemented based on radio frequency identification (RFID) technology, infrared data association (IrDA) technology, ultra-wideband (UWB) technology, Bluetooth (BT) technology and other technologies.

In an exemplary embodiment, the electronic device 1500 may be implemented by one or a plurality of application specific integrated circuits (ASICs), digital signal processors (DSPs), digital signal processing devices (DSPDs), programmable logic devices (PLDs), field programmable gate arrays (FPGA), controllers, microcontrollers, microprocessors, or other electronic components.

In an exemplary embodiment, there is also provided a non-transitory readable storage medium including executable computer programs, such as a memory 1504 including instructions. The executable computer programs are executable by the processor. For example, the readable storage medium may be a ROM, a random access memory (RAM), a CD-ROM, a magnetic tape, a floppy disk, an optical data storage device, etc.

Other embodiments of the present invention will be apparent to those skilled in the art after considering the specification and practicing the present invention disclosed herein. The present invention is intended to cover any variations, uses or adaptive changes of the present invention as defined by the appended claims. The scope of the invention is solely defined by the attached claims.

It should be understood that the present invention is not limited to the precise structures described above and illustrated in the drawings, and various modifications and changes may be made without departing from the scope thereof. The scope of the present invention is merely limited by the attached claims.

## Claims

1. A battery module, comprising: a plurality of cells (1),
a series-parallel conversion circuit (2), a controller (3) coupled to the series-parallel conversion circuit (2) and configured to be integrated into the battery module, the series-parallel conversion circuit is configured to convert a connection mode of cells in the plurality of cells (1) to adjust a charging architecture state of the plurality of cells in the battery module, the charging architecture state comprises at least one of: at least two cells coupled in series, at least two cells coupled in parallel, a combination of first cells coupled in series and second cells coupled in parallel, and a single cell;
**characterized in that**, the controller (3) is configured to convert the connection mode of the cells in the plurality of cells when the battery module is to be charged, such that the plurality of cells form a charging architecture state with a charging current to be supplied to the plurality of cells (1) to be greater than a preset current value and less than a maximum current that a charging cable carries by controlling the series-parallel conversion circuit (2) ;
before controlling the series-parallel conversion circuit to convert the connection mode of the cells in the plurality of cells, the controller (3) is configured to,
in response to that the battery module is to be charged, generate a charging request, wherein the charging request comprises a charging power required by the battery module;
send the charging request to an external charger, to enable the external charger to determine whether the external charger satisfies the required charging power and returns a determination result, wherein the determination result comprises a target charging power that the external charger provides, and when
the target charging power is less than or equal to the required charging power; and
after receiving the determination result, convert the connection mode of the cells in the plurality of cells, such that the plurality of cells form a charging architecture state matching the target charging power, and an initial charging current in the charging architecture state being the maximum current that the charging cable carries.

2. The battery module of claim 1, wherein the series-parallel conversion circuit (2) comprises a plurality of switching devices, and each switching device in the plurality of switching devices is coupled to a positive electrode or a negative electrode of one cell; wherein,
when the switching device is coupled to the positive electrode of one cell, the switching device is configured to couple the positive electrode to a power input end of the battery module or a negative electrode of an upper-level cell based on a control signal of the controller (3); and
when the switching device is coupled to the negative electrode of one cell, the switching device is configured to couple the negative electrode to a power output end of the battery module based on the control signal of the controller (3).

3. The battery module of any one of claims 1 to 2, further comprising: a protocol conversion chip coupled to the controller (3) and configured to perform a conversion between a charging protocol of the controller (3) and a charging protocol of an external charger.

4. The battery module of any one of claims 1 to 3, wherein the controller (3) is configured to obtain a charging current supplied to the plurality of cells during a charging process, and in response to the charging current being less than the preset current value, to convert the connection mode of cells in the plurality of cells, such that the plurality of cells form a charging architecture state with a charging current of the charging cable to be restored to a current between the preset current value and the maximum current that the charging cable carries by controlling the series-parallel conversion circuit (2).

5. A charging control method, for a battery module comprising a plurality of cells and a series-parallel conversion circuit (2), the series-parallel conversion circuit is configured to convert a connection mode of cells in the plurality of cells (1) to adjust a charging architecture state of the plurality of cells in the battery module, the charging architecture state comprising at least one of: at least two cells coupled in series, at least two cells coupled in parallel, a combination of first cells coupled in series and second cells coupled in parallel, and a single cell, and **characterized in that** the method comprises:
determining whether the battery module is to be charged; and
in response to that the battery module is to be charged, converting a connection mode of cells in the plurality of cells, such that the plurality of cells form a charging architecture state with a charging current to be supplied to the plurality of cells (1) to be greater than a preset current value and less than a maximum current that a charging cable carries by controlling the series-parallel conversion circuit (2);
before controlling the series-parallel conversion circuit to convert the connection mode of the cells in the plurality of cells, the method comprising:
in response to that the battery module is to be charged, generating a charging request, wherein the charging request comprises a charging power required by the battery module;
sending the charging request to an external charger, such that the external charger determines whether the external charger satisfies the required charging power and returns a determination result, wherein the determination result comprises a target charging power that the external charger provides, and when the target charging power is less than or equal to the required charging power; and
after the determination result is received, converting the connection mode of the cells in the plurality of cells, such that the plurality of cells form a charging architecture state matching the target charging power, and an initial charging current in the charging architecture state being the maximum current that the charging cable carries.

6. The method of claim 5, before converting the connection mode of the cells in the plurality of cells, the method comprising:
determining a charging parameter provided by an external charger; and
converting the connection mode of the cells in the plurality of cells, such that the plurality of cells forms a charging architecture state matching the charging parameter provided by the external charger.

7. The method of claim 5 or 6, wherein generating the charging request comprises:
obtaining a current voltage of the plurality of cells and the maximum current that the charging cable carries;
obtaining the charging power required by the battery module based on the current voltage and said maximum current; and
generating the charging request based on the obtained charging power.

8. The method of any one of claims 5 to 7, further comprising:
sending a preset identifier to an external charger after the plurality of cells are converted into the charging architecture state, wherein the preset identifier is configured to instruct the external charger to charge the battery module at a target charging power.

9. The method of any one of claims 5 to 8, further comprising:
obtaining a charging current of the plurality of cells during a charging process; and
in response to the charging current being less than the preset current value, converting the charging architecture state formed by the plurality of cells, such that a charging current of the charging cable is restored to a current between the preset current value and the maximum current that the charging cable carries.

10. The method of any one of claims 5 to 9, wherein determining whether the battery module is to be charged comprises:
obtaining at least one current charging parameter of the battery module and at least one preset parameter threshold of the at least one current charging parameter; and
determining whether the battery module is to be charged, based on the at least one preset parameter threshold and the at least one current charging parameter.

11. An electronic device, comprising:
a battery module comprising a plurality of cells and a series-parallel conversion circuit, wherein the series-parallel conversion circuit is configured to convert a connection mode of cells in the plurality of cells to adjust a charging architecture state of the plurality of cells;
a processor; and
a storage device, configured to store a computer program executable by the processor,
wherein the processor is configured to execute the computer program in the storage device to implement steps of the method of any one of claims 5 to 10.

12. A readable storage medium having an executable computer program stored thereon, wherein when the computer program is executed by the processor of the electronic device according to claim 11, cause the electronic device according to claim 11 to perform the steps of the method of any one of claims 5 to 10.

## Patentansprüche

1. Batteriemodul, das aufweist: eine Vielzahl von Zellen (1), eine Reihen-Parallel-Umwandlungsschaltung (2), eine Steuerung (3), die mit der Reihen-Parallel-Umwandlungsschaltung (2) gekoppelt und so ausgebildet ist, dass sie in das Batteriemodul integriert werden kann, wobei die Reihen-Parallel-Umwandlungsschaltung so ausgebildet ist, dass sie einen Verbindungsmodus der Zellen in der Vielzahl von Zellen (1) umwandelt, um einen Ladearchitekturzustand der Vielzahl von Zellen im Batteriemodul anzupassen, wobei der Ladearchitekturzustand mindestens eines aus Folgendem aufweist: mindestens zwei in Reihe geschaltete Zellen, mindestens zwei parallel geschaltete Zellen, eine Kombination aus ersten in Reihe geschalteten Zellen und zweiten parallel geschalteten Zellen sowie eine einzelne Zelle;
**dadurch gekennzeichnet, dass** die Steuerung (3) so ausgebildet ist, dass sie den Verbindungsmodus der Zellen in der Vielzahl von Zellen umwandelt, wenn das Batteriemodul geladen werden soll, sodass die Vielzahl von Zellen einen Ladearchitekturzustand bildet, bei dem der der Vielzahl von Zellen (1) zuzuführende Ladestrom größer als ein voreingestellter Stromwert und kleiner als ein Maximalstrom ist, den ein Ladekabel führt, indem die Reihen-Parallel-Umwandlungsschaltung (2) gesteuert wird;
vor dem Steuern der Reihen-Parallel-Umwandlungsschaltung, um den Verbindungsmodus der Zellen in der Vielzahl von Zellen umzuwandeln, ist die Steuerung (3) so ausgebildet, dass sie als Reaktion darauf, dass das Batteriemodul geladen werden soll, eine Ladeanforderung erzeugt, wobei die Ladeanforderung eine vom Batteriemodul benötigte Ladeleistung umfasst;
Senden der Ladeanforderung an ein externes Ladegerät, damit das externe Ladegerät bestimmen kann, ob das externe Ladegerät die benötigte Ladeleistung erfüllt und ein Bestimmungsergebnis zurückgibt, wobei das Bestimmungsergebnis eine von dem externen Ladegerät bereitgestellte Soll-Ladeleistung umfasst, und wenn die Soll-Ladeleistung kleiner oder gleich der erforderlichen Ladeleistung ist; und
nach dem Empfangen des Bestimmungsergebnisses, Umwandeln des Verbindungsmodus der Zellen in der Vielzahl von Zellen, sodass die Vielzahl von Zellen einen Ladearchitekturzustand bildet, welcher der Soll-Ladeleistung entspricht, und ein Anfangsladestrom in dem Ladearchitekturzustand dem Maximalstrom entspricht, den das Ladekabel führen kann.

2. Batteriemodul nach Anspruch 1, wobei die Reihen-Parallel-Umwandlungsschaltung (2) eine Vielzahl von Schaltvorrichtungen aufweist und jede Schaltvorrichtung in der Vielzahl von Schaltvorrichtungen mit einer positiven Elektrode oder einer negativen Elektrode einer Zelle gekoppelt ist; wobei,
wenn die Schaltvorrichtung mit der positiven Elektrode einer Zelle gekoppelt ist, die Schaltvorrichtung so ausgebildet ist, dass sie die positive Elektrode auf der Grundlage eines Steuersignals der Steuerung (3) mit einem Leistungseingangsende des Batteriemoduls oder einer negativen Elektrode einer übergeordneten Zelle koppelt; und
wenn die Schaltvorrichtung mit der negativen Elektrode einer Zelle gekoppelt ist, die Schaltvorrichtung so ausgebildet ist, dass sie die negative Elektrode auf der Grundlage des Steuersignals der Steuerung (3) mit einem Leistungsausgangsende des Batteriemoduls koppelt.

3. Batteriemodul nach einem der Ansprüche 1 bis 2, das ferner aufweist: einen Protokollkonvertierungschip, der mit der Steuerung (3) gekoppelt und so ausgebildet ist, dass er eine Konvertierung zwischen einem Ladeprotokoll der Steuerung (3) und einem Ladeprotokoll eines externen Ladegeräts durchführt.

4. Batteriemodul nach einem der Ansprüche 1 bis 3, wobei die Steuerung (3) so ausgebildet ist, dass sie einen Ladestrom erfasst, der während eines Ladevorgangs der Vielzahl von Zellen zugeführt wird, und als Reaktion darauf, dass der Ladestrom unter dem voreingestellten Stromwert liegt, den Verbindungsmodus der Zellen in der Vielzahl von Zellen so umwandelt, dass die Vielzahl von Zellen einen Ladearchitekturzustand bildet, bei dem ein Ladestrom des Ladekabels wieder auf einen Strom zwischen dem voreingestellten Stromwert und dem Maximalwert, den das Ladekabel führt, eingestellt wird, indem die Reihen-Parallel-Umwandlungsschaltung (2) gesteuert wird.

5. Verfahren zur Ladesteuerung für ein Batteriemodul, das eine Vielzahl von Zellen und eine Reihen-Parallel-Umwandlungsschaltung (2) aufweist, wobei die Reihen-Parallel-Umwandlungsschaltung so ausgebildet ist, dass sie einen Verbindungsmodus der Zellen in der Vielzahl von Zellen (1) umwandelt, um einen Ladearchitekturzustand der Vielzahl von Zellen im Batteriemodul anzupassen, wobei der Ladearchitekturzustand mindestens eines aus Folgendem aufweist: mindestens zwei in Reihe geschaltete Zellen, mindestens zwei parallel geschaltete Zellen, eine Kombination aus ersten in Reihe geschalteten Zellen und zweiten parallel geschalteten Zellen sowie eine einzelne Zelle, und **dadurch gekennzeichnet, dass** das Verfahren umfasst:
Bestimmen, ob das Batteriemodul geladen werden soll; und
als Reaktion darauf, dass das Batteriemodul geladen werden soll, Umwandeln eines Verbindungsmodus der Zellen in der Vielzahl von Zellen, sodass die Vielzahl von Zellen einen Ladearchitekturzustand bildet, bei dem der der Vielzahl von Zellen (1) zuzuführende Ladestrom größer als ein voreingestellter Stromwert und kleiner als ein Maximalstrom ist, den ein Ladekabel führt, indem die Reihen-Parallel-Umwandlungsschaltung (2) gesteuert wird;
wobei das Verfahren vor dem Steuern der Reihen-Parallel-Umwandlungsschaltung zum Umwandeln des Verbindungsmodus der Zellen in der Vielzahl von Zellen ferner umfasst:
als Reaktion darauf, dass das Batteriemodul geladen werden soll, Erzeugen einer Ladeanforderung, wobei die Ladeanforderung eine vom Batteriemodul benötigte Ladeleistung umfasst;
Senden der Ladeanforderung an ein externes Ladegerät, so dass das externe Ladegerät bestimmt, ob das externe Ladegerät die benötigte Ladeleistung erfüllt und ein Bestimmungsergebnis zurückgibt, wobei das Bestimmungsergebnis eine von dem externen Ladegerät bereitgestellte Soll-Ladeleistung umfasst, und wenn die Soll-Ladeleistung kleiner oder gleich der erforderlichen Ladeleistung ist; und
nachdem das Bestimmungsergebnis empfangen wurde, Umwandeln des Verbindungsmodus der Zellen in der Vielzahl von Zellen, sodass die Vielzahl von Zellen einen Ladearchitekturzustand bildet, welcher der Soll-Ladeleistung entspricht, und ein Anfangsladestrom in dem Ladearchitekturzustand dem Maximalstrom entspricht, den das Ladekabel führen kann.

6. Verfahren nach Anspruch 5, wobei das Verfahren vor dem Umwandeln des Verbindungsmodus der Zellen in der Vielzahl von Zellen umfasst:
Bestimmen eines Ladeparameters, der von einem externen Ladegerät bereitgestellt wird; und
Umwandeln des Verbindungsmodus der Zellen in der Vielzahl von Zellen, sodass die Vielzahl von Zellen einen Ladearchitekturzustand bildet, der mit dem vom externen Ladegerät bereitgestellten Ladeparameter übereinstimmt.

7. Verfahren nach Anspruch 5 oder 6, wobei das Erzeugen der Ladeanforderung umfasst:
Bestimmen einer aktuellen Spannung der Vielzahl von Zellen und des Maximalstroms, den das Ladekabel führt;
Erfassen der vom Batteriemodul benötigten Ladeleistung auf der Grundlage der aktuellen Spannung und des Maximalstroms; und
Erzeugen der Ladeanforderung auf der Grundlage der erfassten Ladeleistung.

8. Verfahren nach einem der Ansprüche 5 bis 7, das ferner umfasst:
Senden einer voreingestellten Kennung an ein externes Ladegerät, nachdem die Vielzahl von Zellen in den Ladearchitekturzustand überführt wurden, wobei die voreingestellte Kennung so ausgebildet ist, dass sie das externe Ladegerät anweist, das Batteriemodul mit einer Soll-Ladeleistung zu laden.

9. Verfahren nach einem der Ansprüche 5 bis 8, das ferner umfasst:
Erfassen eines Ladestroms der Vielzahl von Zellen während eines Ladevorgangs; und
als Reaktion darauf, dass der Ladestrom unter dem voreingestellten Stromwert liegt, Umwandeln des durch die Vielzahl von Zellen gebildeten Ladearchitekturzustands, so dass ein Ladestrom des Ladekabels wieder auf einen Strom zwischen dem voreingestellten Stromwert und dem Maximalstrom, den das Ladekabel führen kann, eingestellt wird.

10. Verfahren nach einem der Ansprüche 5 bis 9, wobei das Bestimmen, ob das Batteriemodul geladen werden soll, umfasst:
Erfassen mindestens eines aktuellen Ladeparameters des Batteriemoduls und mindestens eines voreingestellten Parameterschwellenwerts des mindestens einen aktuellen Ladeparameters; und
Bestimmen, ob das Batteriemodul geladen werden soll, basierend auf dem mindestens einen voreingestellten Parameterschwellenwert und dem mindestens einen aktuellen Ladeparameter.

11. Elektronische Vorrichtung, die aufweist:
ein Batteriemodul, das eine Vielzahl von Zellen und eine Reihen-Parallel-Umwandlungsschaltung aufweist, wobei die Reihen-Parallel-Umwandlungsschaltung so ausgebildet ist, dass sie einen Verbindungsmodus der Zellen in der Vielzahl von Zellen umwandelt, um einen Ladearchitekturzustand der Vielzahl von Zellen anzupassen;
einen Prozessor; und
eine Speichervorrichtung, die dazu ausgebildet ist, ein von dem Prozessor ausführbares Computerprogramm zu speichern,
wobei der Prozessor so ausgebildet ist, dass er das Computerprogramm in der Speichervorrichtung ausführt, um die Schritte des Verfahrens nach einem der Ansprüche 5 bis 10 zu implementieren.

12. Lesbares Speichermedium, auf dem ein ausführbares Computerprogramm gespeichert ist, wobei das Computerprogramm, wenn es von dem Prozessor der elektronischen Vorrichtung nach Anspruch 11 ausgeführt wird, bewirkt, dass die elektronische Vorrichtung nach Anspruch 11 die Schritte des Verfahrens nach einem der Ansprüche 5 bis 10 ausführt.

## Revendications

1. Module de batterie, comprenant une pluralité d'éléments (1), un circuit de conversion série-parallèle (2), un dispositif de commande (3) couplé au circuit de conversion série-parallèle (2) et configuré pour être intégré dans le module de batterie, le circuit de conversion série-parallèle (2) étant configuré pour convertir un mode de connexion d'éléments de la pluralité d'éléments (1) de façon à régler un état d'architecture de charge de la pluralité d'éléments du module de batterie, l'état d'architecture de charge comprenant au moins l'un : d'au moins deux éléments couplés en série, d'au moins deux éléments couplés en parallèle, d'une combinaison de premiers éléments couplés en série et de seconds éléments couplés en parallèle et d'un unique élément ;
**caractérisé en ce que** le dispositif de commande (3) est configuré pour convertir le mode de connexion des éléments de la pluralité d'éléments lorsqu'il convient de charger le module de batterie, de sorte que les éléments de la pluralité d'éléments forment un état d'architecture de charge avec un courant de charge à fournir aux éléments de la pluralité d'éléments (1) pour qu'il soit supérieur à une valeur de courant prédéfinie et inférieur à un courant maximal que transporte un câble de charge par une commande du circuit de conversion série-parallèle (2) ;
avant la commande du circuit de conversion série-parallèle pour convertir le mode de connexion des éléments de la pluralité d'éléments, le dispositif de commande (3) est configuré pour :
en réponse au fait qu'il convient de charger le module de batterie, générer une demande de charge, dans lequel la demande de charge comprend une puissance de charge demandée par le module de batterie ;
envoyer la demande de charge à un chargeur externe pour permettre au chargeur externe de déterminer si le chargeur externe satisfait la puissance de charge demandée et de renvoyer un résultat de détermination, dans lequel le résultat de détermination comprend une puissance de charge cible que fournit le chargeur externe, et lorsque la puissance de charge cible est inférieure ou égale à la puissance de charge demandée ; et
après la réception du résultat de détermination, convertir le mode de connexion des éléments de la pluralité d'éléments, de sorte que les éléments de la pluralité d'éléments forment un état d'architecture de charge correspondant à la puissance de charge cible, et un courant de charge initial de l'état d'architecture de charge étant le courant maximal que transporte le câble de charge.

2. Module de batterie selon la revendication 1, dans lequel le circuit de conversion série-parallèle (2) comprend une pluralité de dispositifs de commutation, et chaque dispositif de commutation de la pluralité de dispositifs de commutation est couplé à une électrode positive ou à une électrode négative d'un élément ; dans lequel,
lorsque le dispositif de commutation est couplé à l'électrode positive d'un élément, le dispositif de commutation est configuré pour coupler l'électrode positive à une extrémité d'entrée de puissance du module de batterie ou à une électrode négative d'un élément de niveau supérieur sur la base d'un signal de commande du dispositif de commande (3) ; et
lorsque le dispositif de commutation est couplé à l'électrode négative d'un élément, le dispositif de commutation est configuré pour coupler l'électrode négative à une extrémité de sortie de puissance du module de batterie sur la base du signal de commande du dispositif de commande (3).

3. Module de batterie selon l'une ou l'autre des revendications 1 et 2, comprenant en outre : une puce de conversion de protocole couplée au dispositif de commande (3) et configurée pour exécuter une conversion entre un protocole de charge du dispositif de commande (3) et un protocole de charge d'un chargeur externe.

4. Module de batterie selon l'une quelconque des revendications 1 à 3, dans lequel le dispositif de commande (3) est configuré pour obtenir un courant de charge fourni aux éléments de la pluralité d'éléments pendant un processus de charge, et en réponse au fait que le courant de charge est inférieur à la valeur de courant prédéfinie, pour convertir le mode de connexion d'éléments de la pluralité d'éléments, de sorte que les éléments de la pluralité d'éléments forment un état d'architecture de charge avec un courant de charge du câble de charge pour qu'il soit restauré à un courant compris entre la valeur de courant prédéfinie et le courant maximal que transporte le câble de charge par une commande du circuit de conversion série-parallèle (2).

5. Procédé de commande de charge, pour un module de batterie comprenant une pluralité d'éléments et un circuit de conversion série-parallèle (2), le circuit de conversion série-parallèle étant configuré pour convertir un mode de connexion d'éléments de la pluralité d'éléments (1) pour régler un état d'architecture de charge des éléments de la pluralité d'éléments du module de batterie, l'état d'architecture de charge comprenant au moins l'un : d'au moins deux éléments couplés en série, d'au moins deux éléments couplés en parallèle, d'une combinaison de premiers éléments couplés en série et de seconds éléments couplés en parallèle, et d'un unique élément, et **caractérisé en ce que** le procédé comprend les étapes consistant à :
déterminer s'il convient de charger le module de batterie ; et
en réponse au fait qu'il convient de charger le module de batterie, convertir un mode de connexion d'éléments de la pluralité d'éléments, de sorte que les éléments de la pluralité d'éléments forment un état d'architecture de charge avec un courant de charge à fournir aux éléments de la pluralité d'éléments (1) pour qu'il soit supérieur à une valeur de courant prédéfinie et inférieur à un courant maximal que transporte un câble de charge par une commande du circuit de conversion série-parallèle (2) ;
avant la commande du circuit de conversion série-parallèle pour convertir le mode de connexion des éléments de la pluralité d'éléments, le procédé comprenant les étapes consistant à :
en réponse au fait qu'il convient de charger le module de batterie, générer une demande de charge, dans lequel la demande de charge comprend une puissance de charge demandée par le module de batterie ;
envoyer la demande de charge à un chargeur externe, de sorte que le chargeur externe détermine si le chargeur externe satisfait la puissance de charge demandée et renvoie un résultat de détermination, dans lequel le résultat de détermination comprend une puissance de charge cible que fournit le chargeur externe, et lorsque la puissance de charge cible est inférieure ou égale à la puissance de charge demandée ; et
après la réception du résultat de détermination, convertir le mode de connexion des éléments de la pluralité d'éléments, de sorte que les éléments de la pluralité d'éléments forment un état d'architecture de charge correspondant à la puissance de charge cible, et un courant de charge initial de l'état d'architecture de charge étant le courant maximal que transporte le câble de charge.

6. Procédé selon la revendication 5, dans lequel, avant l'étape de conversion du mode de connexion des éléments de la pluralité d'éléments, le procédé comprend les étapes consistant à :
déterminer un paramètre de charge fourni par un chargeur externe ; et
convertir le mode de connexion des éléments de la pluralité d'éléments, de sorte que les éléments de la pluralité d'éléments forment un état d'architecture de charge correspondant au paramètre de charge fourni par le chargeur externe.

7. Procédé selon la revendication 5 ou la revendication 6, dans lequel l'étape de génération de la demande de charge consiste à :
obtenir une tension de courant des éléments de la pluralité d'éléments et le courant maximal que transporte le câble de charge ;
obtenir la puissance de charge demandée par le module de batterie sur la base de la tension courante et dudit courant maximal ; et
générer la demande de charge sur la base de la puissance de charge obtenue.

8. Procédé selon l'une quelconque des revendications 5 à 7, comprenant en outre l'étape consistant à :
envoyer un identifiant prédéfini à un chargeur externe après l'étape de conversion des éléments de la pluralité d'éléments dans l'état d'architecture de charge, dans lequel l'identifiant prédéfini est configuré pour ordonner au chargeur externe de charger le module de batterie à une puissance de charge cible.

9. Procédé selon l'une quelconque des revendications 5 à 8, comprenant en outre l'étape consistant à :
obtenir un courant de charge des éléments de la pluralité d'éléments pendant un processus de charge ; et
en réponse au fait que le courant de charge est inférieur à la valeur de courant prédéfinie, convertir l'état d'architecture de charge formé par les éléments de la pluralité d'éléments, de sorte qu'un courant de charge du câble de charge soit restauré à un courant compris entre la valeur de courant prédéfinie et le courant maximal que transporte le câble de charge.

10. Procédé selon l'une quelconque des revendications 5 à 9, dans lequel l'étape de détermination du fait qu'il convient de charger le module de batterie consiste à :
obtenir au moins un paramètre de charge courant du module de batterie et au moins un seuil de paramètre prédéfini de l'au moins un paramètre de charge courant ; et
déterminer s'il convient de charger le module de batterie, sur la base de l'au moins un seuil de paramètre prédéfini et de l'au moins un paramètre de charge courant.

11. Dispositif électronique, comprenant :
un module de batterie comprenant une pluralité d'éléments et un circuit de conversion série-parallèle, dans lequel le circuit de conversion série-parallèle est configuré pour convertir un mode de connexion d'éléments de la pluralité d'éléments pour régler un état d'architecture de charge des éléments de la pluralité d'éléments ;
un processeur ; et
un dispositif de stockage, configuré pour maintenir un programme informatique exécutable par le processeur,
dans lequel le processeur est configuré pour exécuter le programme informatique maintenu dans le dispositif de stockage pour mettre en œuvre les étapes du procédé selon l'une quelconque des revendications 5 à 10.

12. Support de stockage lisible par ordinateur comportant un programme informatique exécutable maintenu en son sein, dans lequel, lorsque le programme informatique est exécuté par le processeur du dispositif électronique selon la revendication 11, ce dernier amène le dispositif électronique selon la revendication 11 à mettre en œuvre les étapes du procédé selon l'une quelconque des revendications 5 à 10.
